# FASCICULE DE BREVET EUROPEEN

(11) **EP 2 437 963 B1**
(45) Date de publication et mention de la délivrance du brevet: **13.03.2013**
(21) Numéro de dépôt: 10724386.7
(22) Date de dépôt: 28.05.2010
(51) Int. Cl.: B60T 7/04, B60T 8/40, B60T 13/14

(54) **SYSTEME DE FREINS A MAÎTRE-CYLINDRE, DECOUPLE DE LA PEDALE DE FREIN ET SERVOFREIN HYDRAULIQUE**
BREMSSYSTEM MIT EINEM VOM BREMSPEDAL ENTKUPPELTEN HAUPTBREMSZYLINDER UND HYDRAULISCHER BREMSKRAFTVERSTÄRKER
BRAKE SYSTEM HAVING A MASTER CYLINDER THAT IS DECOUPLED FROM THE BRAKE PEDAL AND HYDRAULIC BRAKE BOOSTER

(30) Priorité: 05.06.2009 FR 0902749
(43) Date de publication de la demande: 11.04.2012
(73) Titulaire: Robert Bosch GmbH, 70442 Stuttgart (DE)
(72) Inventeur: SOKOU, Komi, 93400 Saint-Ouen (FR); WINKLER, Roman, 92600 Asnières sur Seine (FR); CAGNAC, Bastien, 60660 Cramoisy (FR); ANDERSON, Chris, 75002 Paris (FR); SPROCQ, Raynald, 77450 Esbly (FR)
(86) Numéro de dépôt international: PCT/EP2010/057420
(87) Numéro de publication internationale: WO 2010/139626

(56) Documents cités:
- US-A1- 2003 090 149
- US-A1- 2006 158 026

## Description

### Domaine de l'invention

La présente invention concerne un système de freins à maître-cylindre, découplé de la pédale de frein et servofrein hydraulique comprenant
- une chambre d'amplification dans laquelle pénètre l'arrière du piston du maître-cylindre, alimentée de manière commandée par un groupe haute pression, fournissant sur commande du liquide de frein sous haute pression à la chambre d'amplification pour agir sur le piston du maître-cylindre,
- une chambre d'actionneur recevant un piston d'actionneur relié à la tige de commande de la pédale de frein,
- une liaison hydraulique commandée entre la chambre d'amplification et la chambre d'actionneur.

### Etat de la technique

Il existe de nombreux systèmes de freins à servofrein hydraulique, en série avec le maître-cylindre. Toutefois, ces systèmes connus ont, en général, l'inconvénient d'être relativement encombrants et leur conception complexe comme décrit dans la demande de brevet US 2006/0158026 A1.

### But de l'invention

La présente invention a pour but de développer un système de freins à servofrein hydraulique découplé de la pédale de frein et permettant d'assurer un fonctionnement de secours en cas de défaillance du groupe haute pression alimentant la chambre d'amplification du servofrein hydraulique.

### Exposé et avantages de l'invention

A cet effet, la présente invention concerne un système de freins à maître-cylindre, découplé de la pédale de frein et servofrein hydraulique comprenant
- une chambre d'amplification dans laquelle pénètre l'arrière du piston du maître-cylindre, alimentée de manière commandée par un groupe haute pression, fournissant sur commande du liquide de frein sous haute pression à la chambre d'amplification pour agir sur le piston du maître-cylindre,
- une chambre d'actionneur recevant un piston d'actionneur relié à la tige de commande de la pédale de frein,
- une liaison hydraulique commandée, entre la chambre d'amplification et la chambre d'actionneur.

Ce système de freins a l'avantage d'une conception particulièrement simple et de se composer d'un nombre réduit d'éléments se traduisant par un avantage important du point de vue du coût de fabrication. L'encombrement est réduit ce qui est un avantage très important pour l'intégration de ce système de freins dans le compartiment moteur d'un véhicule.

Selon une caractéristique importante, le système de freins comporte un simulateur de freinage formé d'une chambre de simulateur délimitée par un piston repoussé par au moins un ressort, cette chambre communiquant avec la chambre d'actionneur par une liaison hydraulique commandée.

Suivant une autre caractéristique importante, le piston du maître-cylindre porte une tige de poussée solidaire en mouvement du piston et venant en saillie dans la chambre d'actionneur en restant à une distance déterminée du piston d'actionneur, en fonctionnement normal mais pour être poussée par le piston d'actionneur en cas de défaillance du groupe haute-pression après refoulement d'une certaine quantité de liquide de la chambre d'actionneur).

Ainsi, le système de freins selon l'invention permet de mettre en pression le maître-cylindre, notamment un maître-cylindre tandem, qui est découplé de la pédale de frein. Cette mise en pression ne nécessite pas piston supplémentaire pour le servofrein hydraulique. La mise en pression peut être commandée par la pédale de frein mais aussi automatiquement par un système de régulation tel que les systèmes ABS, ARS, sans intervention du conducteur et sans que celui-ci ne le perçoive par une réaction sur la pédale de frein. En cas de défaillance du groupe haute pression, il permet d'assurer un fonctionnement de secours d'abord par la mise en communication de la chambre d'actionneur à la chambre d'amplification pour refouler du liquide de la chambre d'actionneur à la chambre d'amplification en fonction de la poussée exercée sur la pédale de frein et la tige de commande.

Ensuite, un second niveau de fonctionnement de secours est assuré d'une manière mécanique, en cas de fuite du circuit hydraulique au niveau du servofrein et du maître-cylindre, le piston d'actionneur peut pousser directement la tige de poussée associée au piston du maître-cylindre qui est le piston primaire dans le cas d'un maître-cylindre tandem.

Dans le cas de l'assistance de secours, hydraulique de premier niveau, on un effet d'amplification de l'effort exercé par le conducteur sur la pédale de frein et, en fonction du rapport des sections actives du piston d'actionnement et du piston du maître-cylindre, cette amplification se fait à travail égal sans course morte à la pédale de frein puisque la chambre d'actionnement est uniquement remplie de liquide.

La seconde action de secours par transmission mécanique se fait avec la course morte égale au jeu de découplage, c'est-à-dire à l'intervalle qui existe normalement entre l'avant du piston d'actionneur et l'arrière de la tige de poussée.

Suivant une autre caractéristique avantageuse, le servofrein comporte un corps ayant un premier alésage côté maître-cylindre, suivi d'un second alésage et d'un troisième alésage, le premier alésage définissant avec le maître-cylindre la chambre d'amplification, et le second alésage reçoit le piston d'actionneur guidé dans le troisième alésage.

Suivant une autre caractéristique, la chambre d'amplification est séparée de la chambre d'actionneur par un disque séparateur muni d'un moyeu formant le palier de la tige de poussée traversant le disque séparateur de manière étanche.

Suivant une autre caractéristique, le piston d'actionneur comporte, côté chambre d'actionneur, un logement annulaire entourant un cylindre central, le logement annulaire recevant l'extrémité d'un ressort de rappel par ailleurs appuyé contre le disque séparateur autour de son moyeu, le cylindre central étant destiné à pousser la tige de poussée dans des conditions de fonctionnement de secours.

Suivant une autre caractéristique, la liaison hydraulique commandée comporte une électrovanne normalement fermée mais ouverte en cas de défaillance du groupe haute pression, cette liaison s'ouvre, mettant en communication hydraulique la chambre d'actionneur et la chambre d'amplification pour transmettre du liquide sous pression de la chambre d'actionneur à ma chambre d'amplification sous l'effet de la poussée du piston d'actionneur, la liaison hydraulique commandée entre la chambre d'actionneur et la chambre de simulateur est munie d'une électrovanne normalement ouverte, mais fermée en cas de défaillance du groupe haute pression pour isoler la chambre d'actionneur par rapport au simulateur.

Sur le plan de l'assemblage, grâce à la structure du maître-cylindre tandem auquel on associe directement la tige de poussée et à la structure du servofrein hydraulique avec le disque séparateur, on peut réaliser séparément les deux sous-ensembles et les assembler dans des conditions tout aussi simple.

### Dessins

La présente invention sera décrite ci-après de manière plus détaillée à l'aide d'un mode de réalisation d'un système de frein à servofrein hydraulique et maître-cylindre représenté dans les dessins annexés dans lesquels :
- la figure 1 est une vue en coupe du système de frein à maître-cylindre et servofrein hydraulique,
- la figure 2A est une vue en coupe du maître-cylindre tandem de la figure 1,
- la figure 2B est une vue en coupe du servofrein hydraulique de la figure 1,
- la figure 2C est une vue en coupe du disque séparateur,
- la figure 2D est une vue en coupe du piston d'actionneur,
- la figure 3A est une vue schématique du système de frein selon la figure 1 en fonctionnement normal,
- la figure 3B est une vue schématique analogue à celle de la figure 3A pour le système de frein en fonctionnement de secours de premier niveau,
- la figure 3C est une vue schématique analogue à celle de la figure 3B du système de frein en fonctionnement de secours de second niveau.

### Description d'un mode de réalisation de l'invention

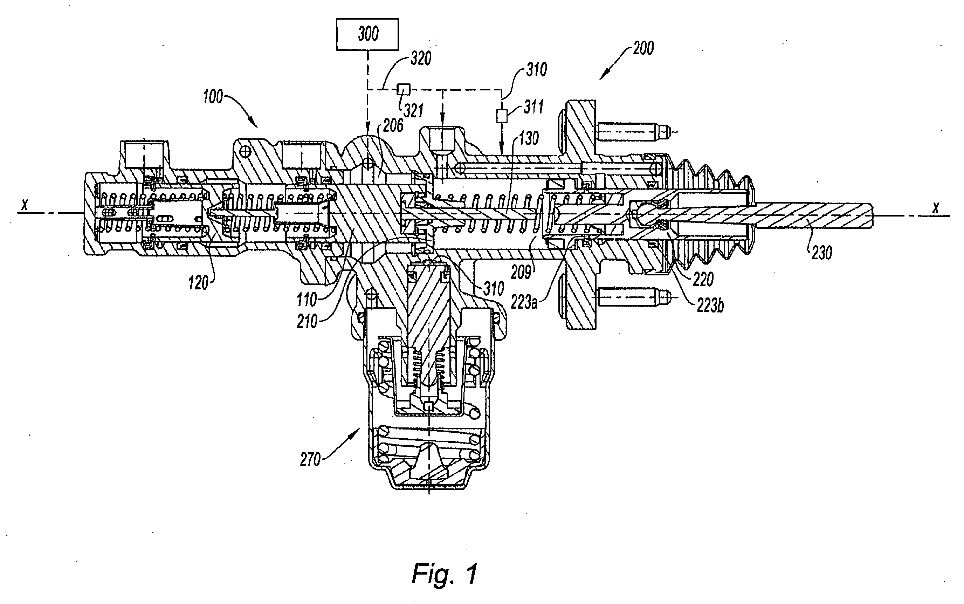

La figure 1 représente un système de freins comprenant un maître-cylindre 100 combiné à un servofrein hydraulique 200 selon l'invention. Le maître-cylindre 100est ici un maître-cylindre tandem 100. Par convention, l'orientation du système de freins, pour la présente description est l'orientation traditionnelle, le maître-cylindre 100 étant situé à gauche et le servofrein 200 à droite, de sorte que le maître-cylindre se trouve à l'avant du servofrein et la pédale de frein à l'arrière du servofrein.

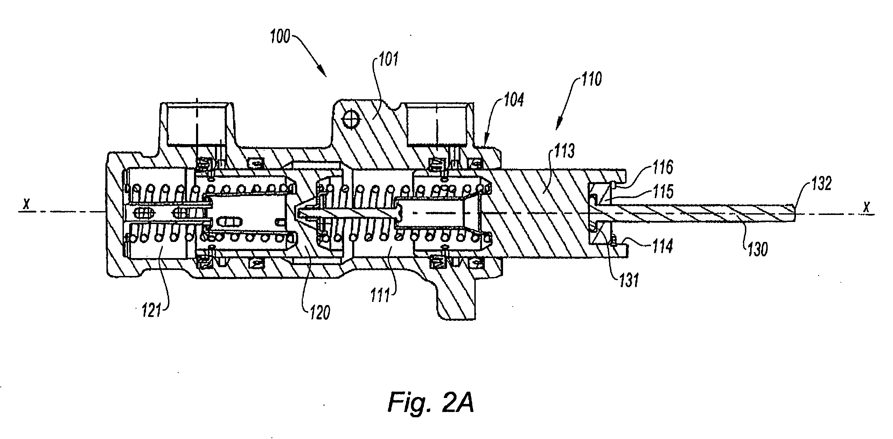

De façon plus détaillée selon les vues en coupe des figures 2A-2D et notamment la figure 2A, le maître-cylindre tandem 100 comporte un corps 101 logeant un piston primaire 110 et un piston secondaire 120 délimitant chacun une chambre 111, 121 alimentée en liquide de frein à partir d'un réservoir non représenté, par des liaisons de fluide ouvertes lorsque les pistons sont en position neutre, non déplacés, et qui se ferment dès que les pistons sont déplacés pour mettre en pression le liquide de frein des chambres et le fournir aux circuits de frein C1, C2 par des branchements non représentés.

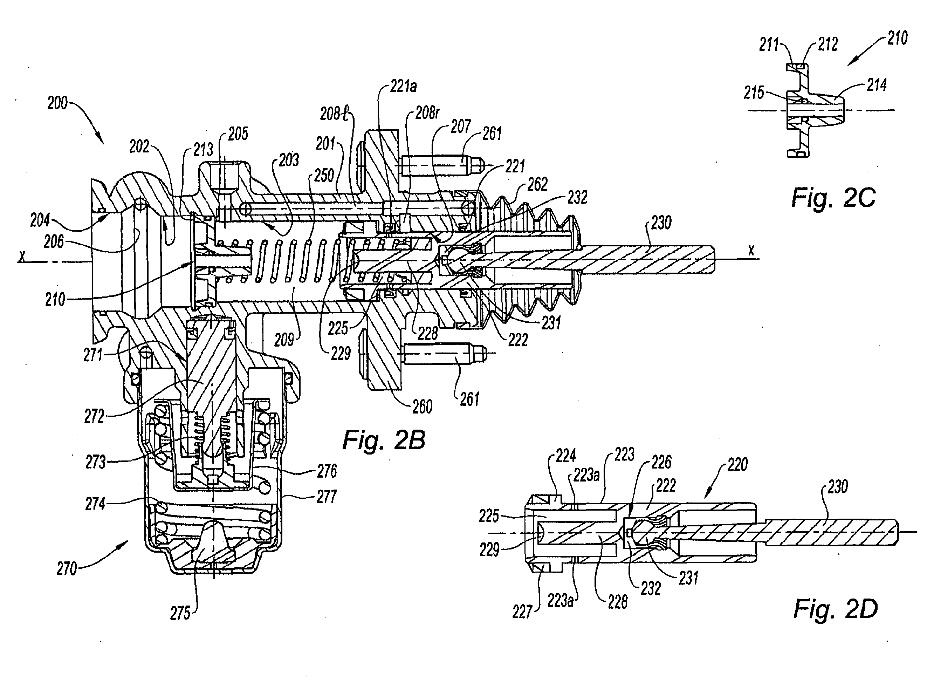

Selon la figure 2B, le servofrein hydraulique 200 se compose d'un corps 201 avec un premier alésage 202 et un second alésage 203, alignés sur l'axe XX de l'alésage 102 du maître-cylindre tandem 100. La section du premier alésage 202 est supérieure à celle du second alésage 203 en formant entre eux, un épaulement 205. Le servofrein hydraulique 200 est relié au maître-cylindre tandem 100 par l'entrée 204 de son premier alésage 202 emmanchée sur l'extrémité 104 du corps 101 du maître-cylindre tandem formant un palier d'assemblage, l'ensemble étant maintenu par des organes de liaison non représentés.

Le premier alésage 202 forme une chambre d'amplification 206 fermée par un disque séparateur 210 appliqué contre l'épaulement 205 et muni d'une collerette cylindrique 211 à gorge garnie d'un joint d'étanchéité 212 pour la paroi de la chambre d'amplification 206. Le disque séparateur 210 est bloqué par un anneau élastique 213 enclipsé dans une gorge usinée dans l'alésage 202 devant le bord de la collerette cylindrique 211 du disque 210.

Le disque séparateur 210 selon la figure 2C comporte un moyeu 214 formant un palier de guidage suivant l'axe XX.

Selon les figures 1 et 2A, le piston primaire 110 pénètre par son prolongement arrière 113 dans la chambre d'amplification 206 et sa face arrière comporte un logement 114 dans lequel est fixée la tête 131 d'une tige de poussée 130 traversant de manière étanche, le palier formé par le moyeu 214 du disque séparateur 210 constituant le fond de la chambre d'amplification 206. La tête 131 est retenue contre le fond du logement 114 par une rondelle 115 maintenue dans le logement par un anneau élastique 116 enclipsé.

La tige de poussée 130 est destinée à transmettre directement les efforts exercés sur la pédale de frein dans des conditions de fonctionnement de secours, en étant poussée par le piston d'actionneur 220. Pour cela, la tige a les caractéristiques dimensionnelles et de matière permettant de transmettre de tels efforts. Néanmoins, sa section est réduite au minimum pour les raisons données ultérieurement. Son diamètre est, par exemple, de l'ordre de 10 mm.

Le moyeu 214 du disque séparateur 210 est muni d'un joint 215 côté chambre d'amplification 206 dans lequel passe la tige de poussée 130.

Selon les figures 1, 2B et 2D, derrière le disque séparateur 210, le deuxième alésage 203 du servofrein hydraulique loge un piston d'actionneur 220 relié à la tige de commande 230 venant de la pédale de frein. La piston d'actionneur 220 est guidé dans un troisième alésage 207 à l'extrémité arrière du corps 201 du servofrein hydraulique 200.

Cet alésage 207 communique par un perçage radial 208r et un perçage longitudinal 2081 avec le réservoir de liquide de frein pour alimenter la chambre d'actionneur 209 délimitée par le piston d'actionneur 220 dans le deuxième alésage 203 derrière le disque séparateur 210 ; l'alimentation en liquide de frein est assurée de façon analogue à celle des chambres 111, 121 du maître-cylindre tandem 100, entre deux joints périphériques 221a, b (coupelles) logés dans des gorges du troisième alésage 207.

Selon la figure 2D, le piston d'actionneur 220 a une partie centrale 222 (ou moyeu) bordée par une jupe cylindrique 223, longue, permettant d'assurer l'alimentation de la chambre d'actionneur 209 lorsque le piston d'actionneur 220 est en position neutre et de couper cette communication avec le réservoir de liquide de frein dès que le piston 220 est déplacé par la tige de commande 230. La jupe 223 porte extérieurement et légèrement en retrait du bord avant, une couronne 224 complétant la section du piston et l'adaptant à celle de la chambre d'actionneur 209. La couronne 224 se guide dans cette chambre et comporte un joint de guidage 227 monté autour du cylindre devant la couronne.

La partie centrale 222 à l'avant du piston d'actionneur forme un logement annulaire 225 entourant un cylindre central 228 dans l'axe XX ; le cylindre central 228 se termine à l'avant par une cavité arrondie 229 en face de l'extrémité arrière arrondie 132 de la tige de poussée 130. Le logement annulaire 225 reçoit un ressort de rappel 250 entourant la tige de poussée 130 et le moyeu 214 formant le palier de guidage de la tige de poussée 130 dans le disque séparateur 210.

Le côté arrière du piston d'actionneur 220 comporte une cavité cylindrique 226 dans laquelle est logée une coupelle en forme de tulipe 232 coiffant la tête 231 en forme de rotule de la tige de commande 230.

L'arrière du corps 201 du servofrein hydraulique 200 est muni d'une bride de fixation 260 pour installer le servofrein et le maître-cylindre tandem qu'il porte contre le tablier séparant l'enceinte moteur et l'habitacle du véhicule.

Le corps 201 du servofrein hydraulique 200 comporte en saillie un simulateur de freinage 270 formé d'un cylindre 271 dans lequel coulisse un piston 272 coopérant avec des ressorts de rappel 273, 274 fonctionnant en série et une butée élastique 275 de fin course, pour simuler la réaction des circuits de freins en réponse à l'action sur la pédale de frein.

De façon plus détaillée, le premier ressort 273 s'appuie contre le piston 272 et une coupelle 276 elle-même appuyée contre le second ressort 274. Ce dernier est appuyé contre le fond d'un capot 277 fixé au corps 201 du servofrein hydraulique et comportant la butée élastique 275 pour la coupelle 276.

Ainsi, en fonction du degré d'enfoncement de la pédale de frein et du déplacement qui en résulte de la tige de commande 230 et du piston d'actionneur 220, le piston 272 du simulateur est soumis d'abord à l'effet antagoniste du premier ressort 273 ; puis lorsque le piston 272 est en appui direct contre la coupelle 276 de ce premier ressort, il doit repousser le second ressort 274 et finalement, il peut venir par l'intermédiaire de la coupelle du ressort, en appui contre la butée 275. Cette butée est elle-même élastique mais oppose une forte résistance.

Les ressorts du simulateur ont des duretés qui simulent par leur combinaison, la réaction croissante d'un système de frein.

Les différentes parties du servofrein hydraulique et du maître-cylindre tandem communiquent par des liaisons hydrauliques comme cela sera décrit ci-après selon la figure 1.

La chambre d'amplification 206 est reliée à un groupe haute pression 300 qui fournit, sur commande, le liquide sous pression agissant sur la section du piston primaire 110 dans la chambre d'amplification.

La chambre d'actionneur 203 est alimenté en liquide de frein par sa mise en communication avec le réservoir relié par les perçages 208r, 2081 qui débouchent dans l'alésage 207 recevant la jupe 223 du piston d'actionneur 220. Le liquide peut ainsi arriver dans la chambre d'actionneur 209 à travers les orifices 223a de la jupe 223 et le logement annulaire 225 lorsque la jupe et les orifices ne sont pas déplacés au-delà de la première coupelle 221a ; c'est-à-dire lorsque le piston d'actionneur 220 est en position neutre.

La chambre d'actionneur 209 est reliée au simulateur 270 par une conduite 310 commandée par une vanne 311. Cette liaison 310 est normalement ouverte de sorte que le liquide comprimé dans la chambre d'actionneur 209 par le piston d'actionneur 220 est refoulé dans la chambre 271 du simulateur 270 contre l'action des ressorts 273, 274 s'appuyant sur le piston 272 du simulateur ; cette action crée une réaction transmise par le liquide emprisonné dans le volume défini par la chambre de simulation 271 et la chambre d'actionneur 209, au piston d'actionneur 220 ; la tige de commande 230 transmet cette réaction à la pédale de frein donnant au conducteur la sensation de la réaction des freins.

La chambre d'actionneur 209 est également reliée par une liaison de fluide 320, commandée par une vanne 321, à la chambre d'amplification 206. Cette liaison 320 est normalement fermée ; elle est ouverte en cas de défaillance du groupe haute pression.

Les vannes 311, 321 sont des électrovannes telles que des vannes à tiroir. La vanne est 311 maintenue ouverte pendant le fonctionnement normal du servofrein et elle est fermée en cas de coupure de courant par son ressort de rappel, la coupure de courant correspondant à un fonctionnement anormal ou fonctionnement de secours.

Pour la vanne 321, le fonctionnement est inversé : cette vanne est maintenue fermée en fonctionnement normal et elle s'ouvre automatiquement en fonctionnement de secours par la coupure de son alimentation électrique, l'ouverture étant assurée par le ressort de rappel.

La structure et la constitution du maître-cylindre 100 et du servofrein 200 avec son simulateur permettent un assemblage particulièrement intéressant de l'ensemble.

Ainsi, les figures 2A et 2B montrent séparément chacun des deux sous-ensembles constituant le système de maître-cylindre à servofrein hydraulique, avant leur assemblage.

Ainsi, le sous-ensemble du maître-cylindre tandem 100 comporte le corps 101 avec l'épaulement 104 destiné à recevoir le corps 201 du servofrein hydraulique 200 et le prolongement arrière 113 du piston primaire muni de la tige de poussée 130, fixée à demeure.

La figure 2B montre le sous-ensemble constitué par le servofrein 200 avant son assemblage. Il se compose du corps 201 muni du simulateur 270. Le piston d'actionneur 220 a été introduit dans le troisième alésage 207 du corps 201 en passant par son ouverture 204 avant puis, on a mis en place le ressort de rappel 250 et le disque séparateur 210 que l'on bloque par la bague élastique 213 enclipsée dans la rainure du premier alésage 202.

Dans cette version, la tige de commande 230 est déjà assemblée au piston d'actionneur 220. Cette opération peut aussi se faire après assemblage du servofrein 200 au maître-cylindre 100. Puis, on met en place le soufflet 262 protégeant l'extrémité arrière du servofrein.

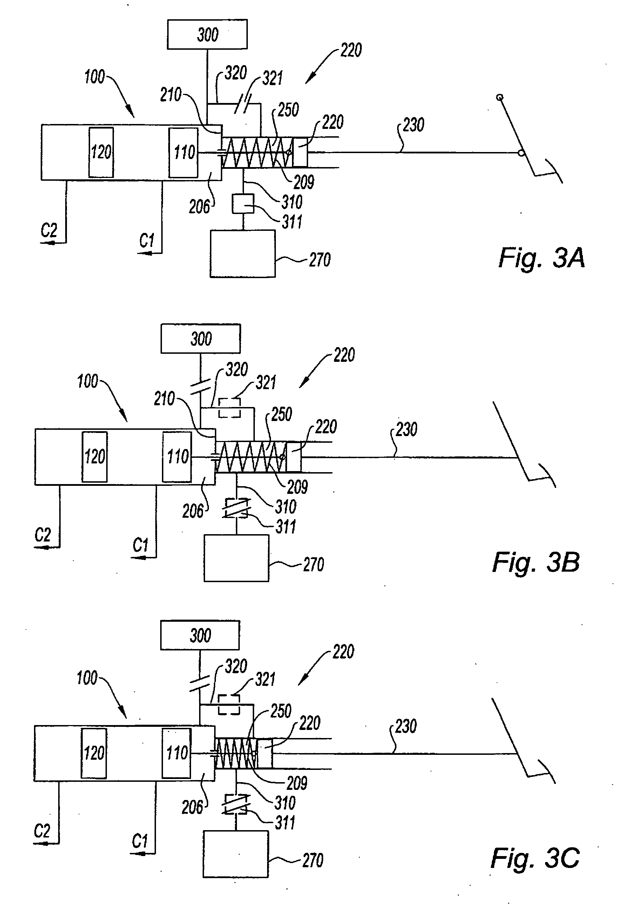

Le fonctionnement du maître-cylindre à servofrein sera décrit de manière plus détaillée à l'aide des schémas des figures 3A à 3C.

La figure 3A montre schématiquement le servofrein hydraulique et le maître-cylindre tandem ainsi que les liaisons hydrauliques commandées.

Dans les conditions normales de fonctionnement du servofrein hydraulique, le mouvement de la tige de commande 230 poussée par la pédale de frein est détecté et permet de commander le groupe haute pression 300 qui fournit de façon appropriée, du liquide de frein sous haute pression à la chambre d'amplification 206 ; cette pression agit sur le piston primaire 110 qui agit lui-même sur le piston secondaire 120 par l'intermédiaire de la chambre primaire 111 de façon à fournir du liquide de frein sous pression aux circuits de frein C1, C2. Pendant ce fonctionnement, la chambre d'actionneur 209 remplie de liquide de frein, est en communication avec le simulateur 270, sa liaison avec la chambre d'amplification étant fermée c'est-à-dire coupée. Il y ainsi un volume de liquide constant dans la chambre d'actionnement et la chambre du simulateur pour transmettre la réaction simulée des freins.

Le volume de la chambre d'actionneur 209 et de la chambre de simulation 271 est constant à la variation près, liée à la tige de poussée qui avance dans le disque séparateur 210 La section de la tige étant réduite au minimum nécessaire à la transmission directe des efforts pendant le fonctionnement de secours de niveau 2 (voir ci-après), cette variation de volume ne perturbera pas la simulation de la réaction par le simulateur 270.

Il est également à remarquer que dans les conditions normales de fonctionnement, le piston d'actionneur 220 n'est pas en contact avec la tige de poussée 130, un intervalle étant maintenu par l'avancée du piston primaire 110, commandée par l'intermédiaire de l'envoi de liquide sous pression par le générateur haute pression 300 dans la chambre d'amplification 206 en fonction de l'avancée détectée du piston d'actionneur 220. Cette avancée est détectée par exemple au niveau de la tige de commande 230 par des moyens habituels non représentés.

La figure 3B montre un fonctionnement de secours de premier niveau. On suppose que le groupe haute pression 300 est défaillant et ne peut pas fournir du liquide sous pression à la chambre d'amplification 206.

La défaillance du groupe haute pression 300 produit automatiquement l'ouverture de la liaison hydraulique 320 reliant la chambre d'actionneur 209 à la chambre d'amplification 206. Cette mise en communication permet de refouler du liquide sous pression de la chambre d'actionneur 209 vers la chambre d'amplification 209 selon l'effort exercé par le conducteur sur la pédale de frein, et qui est transmis pour la tige de commande 230 au piston d'actionneur 220.

Selon un mode de réalisation de l'invention, en même temps que s'ouvre la liaison hydraulique 310 établissant la communication de liquide entre la chambre d'actionneur 209 et la chambre d'amplification 206, la liaison 310 de la chambre d'actionneur 209 avec le simulateur 270, est coupée de sorte que le piston d'actionneur 220, refoule intégralement du liquide dans la chambre d'amplification 206 et l'action exercée sur la pédale de frein, se répercute intégralement sur le piston primaire 110 sans qu'une partie de cette énergie ne soit absorbée par le fonctionnement du simulateur 270 ; cela est d'autant plus intéressant que le simulateur 270 est alors inutile puisque la réaction du système de freinage est directement transmise au piston d'actionneur 220 et par suite à la pédale de frein.

Le degré d'amplification de l'action dépend du rapport des sections du piston d'actionneur 220 et du piston primaire 110. la section du piston 220 étant celle de la jupe 223 et non celle de la collerette 224 qui sert seulement au guidage du piston 220.

La figure 3C montre le second niveau de fonctionnement de secours du système de freins selon l'invention.

On suppose que par suite de fuites, le refoulement de liquide de frein comprimé par le piston d'actionneur 220 n'est plus suffisant pour repousser le piston primaire 110 si bien que le piston d'actionneur 220 vient en appui contre la tige de poussée 130 du piston primaire 110.

A partir de ce contact, l'effort appliqué par la pédale de frein et la tige de commande 230 au piston d'actionneur 220 est transmis mécaniquement à la tige de poussée 130 c'est-à-dire au piston primaire 110 qui commande le freinage de secours.

La présente invention concerne le domaine des systèmes de freins de véhicules automobiles et l'industrie des équipements de freins.

### NOMENCLATURE

- 100: maître-cylindre tandem
- 101: corps du maître-cylindre tandem
- 110: piston primaire
- 111: chambre du piston primaire
- 113: prolongement du piston primaire
- 114: logement
- 115: rondelle
- 116: anneau élastique
- 120: piston secondaire
- 121: chambre du piston secondaire
- 130: tige de poussée
- 131: tête de la tige de poussée

- 200: servofrein hydraulique
- 201: corps du servofrein
- 202: premier alésage
- 203: deuxième alésage
- 204: entrée du premier alésage
- 205: épaulement
- 206: chambre d'amplification
- 207: troisième alésage
- 208r: perçage radial
- 2081: perçage longitudinal
- 209: chambre d'actionneur
- 210: disque séparateur
- 211: collerette cylindrique
- 212: joint d'étanchéité
- 213: anneau élastique
- 214: moyeu
- 215: joint
- 220: piston d'actionneur
- 221: coupelle (joint)
- 222: moyeu / partie centrale
- 223: jupe
- 223a: orifices de la jupe
- 224: couronne
- 225: logement annulaire
- 226: cavité cylindrique
- 227: joint de guidage
- 228: cylindre central
- 229: cavité
- 230: tige de commande
- 231: tête de la tige
- 232: coupelle en forme de tulipe
- 250: ressort de rappel
- 260: bride
- 261: tirant
- 262: soufflet
- 270: simulateur
- 271: cylindre / chambre de simulateur
- 272: piston
- 273: ressort de rappel
- 274: ressort de rappel
- 275: butée
- 276: coupelle
- 277: capot

- 300: groupe haute pression
- 310: liaison hydraulique
- 311: vanne
- 320: liaison hydraulique
- 321: vanne

- C1, C2: circuits de freins

## Revendications

1. Système de freins à maître-cylindre, découplé de la pédale de frein et servofrein hydraulique comprenant
- une chambre d'amplification (206) dans laquelle pénètre l'arrière du piston (110) du maître-cylindre (100), alimentée de manière commandée par un groupe haute pression (300), fournissant sur commande du liquide de frein sous haute pression à la chambre d'amplification pour agir sur le piston (110) du maître-cylindre (100),
- une chambre d'actionneur (209) recevant un piston d'actionneur (220) relié à la tige de commande (230) de la pédale de frein,
- une liaison hydraulique (320) commandée par une vanne (321), entre la chambre d'amplification (206) et la chambre d'actionneur (209). **caractérisé en ce que**
la liaison hydraulique (320) commandée par une vanne (321) comporte une électrovanne (321) normalement fermée mais ouverte en cas de défaillance du groupe haute pression 300), cette liaison s'ouvre, mettant en communication hydraulique la chambre d'actionneur (209) et la chambre d'amplification (206) pour transmettre du liquide sous pression de la chambre d'actionneur à ma chambre d'amplification sous l'effet de la poussée du piston d'actionneur (220),
la liaison hydraulique commandée (310, 311) entre la chambre d'actionneur (220) et la chambre de simulateur (271) est munie d'une électrovanne (311) normalement ouverte, mais fermée en cas de défaillance du groupe haute pression (300) pour isoler la chambre d'actionneur (209) par rapport au simulateur (270).

2. Système de freins à servofrein hydraulique selon la revendication 1,
**caractérisé en ce qu'**
il comporte un simulateur de freinage (270) formé d'une chambre de simulateur (271) délimitée par un piston (272) repoussé par au moins un ressort (273, 274), cette chambre (271) communiquant avec la chambre d'actionneur (220) par une liaison hydraulique commandée (310, 311).

3. Système de freins à servofrein hydraulique selon la revendication 1,
**caractérisé en ce que**
le piston (110) du maître-cylindre (100) porte une tige de poussée (130) solidaire en mouvement du piston (110) et venant en saillie dans la chambre d'actionneur (220) en restant à une distance déterminée du piston d'actionneur (220), en fonctionnement normal mais pour être poussée par le piston d'actionneur en cas de défaillance du groupe haute-pression (300) après refoulement d'une certaine quantité de liquide de la chambre d'actionneur (220).

4. Système de freins à servofrein hydraulique selon la revendication 1,
**caractérisé en ce que**
la section du piston d'actionneur (220) (jupe (223)) est inférieure à la section du piston (110) du maître-cylindre dans la chambre d'amplification (206).

5. Système de freins à servofrein hydraulique selon la revendication 1,
**caractérisé en ce que**
le servofrein comporte un corps (201) ayant un premier alésage (202) côté maître-cylindre (100), suivi d'un second alésage (203) et d'un troisième alésage (207), le premier alésage définissant avec le maître-cylindre (100) la chambre d'amplification (206), et le second alésage (203) reçoit le piston d'actionneur (220) guidé dans le troisième alésage (207).

6. Système de freins à servofrein hydraulique selon la revendication 5,
**caractérisé en ce que**
la chambre d'amplification (206) est séparée de la chambre d'actionneur (209) par un disque séparateur (210) muni d'un moyeu (214) formant le palier de la tige de poussée (130) traversant le disque séparateur (210) de manière étanche.

7. Système de freins à servofrein hydraulique selon la revendication 1,
**caractérisé en ce que**
le piston d'actionneur (220) comporte, côté chambre d'actionneur (209), un logement annulaire entourant un cylindre central (228), le logement annulaire recevant l'extrémité d'un ressort de rappel (250) par ailleurs appuyé contre le disque séparateur (210) autour de son moyeu (214), le cylindre central (228) étant destiné à pousser la tige de poussée (130) dans des conditions de fonctionnement de secours.

## Claims

1. Braking system with master cylinder, decoupled from the brake pedal and hydraulic brake booster, comprising
- a boost chamber (206) in which the rear of the piston (110) of the master cylinder (100) is inserted, supplied in a controlled manner by a high pressure unit (300), supplying brake fluid under high pressure on command to the boost chamber in order to act on the piston (110) of the master cylinder (100),
- an actuator chamber (209) receiving an actuator piston (220) connected to the control rod (230) of the brake pedal,
- a hydraulic link (320) controlled by a valve (321) between the boost chamber (206) and the actuator chamber (209),
**characterized in that**
the hydraulic link (320) controlled by a valve (321) comprises a solenoid valve (321) which is normally closed but open in the event of malfunction of the high pressure unit (300), said link being opened, placing in hydraulic communication the actuator chamber (209) and the boost chamber (206) to transmit pressurized fluid from the actuator chamber to the boost chamber under the action of the thrust of the actuator piston (220), the controlled hydraulic link (310, 311) between the actuator chamber (220) and the simulator chamber (271) is provided with a solenoid valve (311) which is normally open, but closed in the event of malfunction of the high pressure unit (300) to isolate the actuator chamber (209) relative to the simulator (270).

2. Braking system with hydraulic brake booster according to Claim 1, **characterized in that** it comprises a brake simulator (270) formed by a simulator chamber (271) defined by a piston (272) pushed back by at least one spring (273, 274), said chamber (271) communicating with the actuator chamber (220) by a controlled hydraulic link (310, 311).

3. Braking system with hydraulic brake booster according to Claim 1, **characterized in that** the piston (110) of the master cylinder (100) carries a push rod (130) fixed in movement to the piston (110) and protruding into the actuator chamber (220) while remaining at a fixed distance from the actuator piston (220) in normal operation, but to be pushed by the actuator piston in the event of malfunction of the high pressure unit (300) after a specific quantity of fluid is forced back from the actuator chamber (220).

4. Braking system with hydraulic brake booster according to Claim 1, **characterized in that** the section of the actuator piston (220) (skirt (223)) is less than the section of the piston (110) of the master cylinder in the boost chamber (206).

5. Braking system with hydraulic brake booster according to Claim 1, **characterized in that** the brake booster comprises a body (201) having a first bore (202) on the master cylinder (100) side, followed by a second bore (203) and a third bore (207), the first bore defining with the master cylinder (100) the boost chamber (206) and the second bore (203) receiving the actuator piston (220) guided in the third bore (207).

6. Braking system with hydraulic brake booster according to Claim 5, **characterized in that** the boost chamber (206) is separated from the actuator chamber (209) by a separating disc (210) provided with a hub (214) forming the bearing of the push rod (130) passing through the separating disc (210) in a sealed manner.

7. Braking system with hydraulic brake booster according to Claim 1, **characterized in that** the actuator piston (220) comprises, on the actuator chamber (209) side, an annular housing surrounding a central cylinder (228), the annular housing receiving the end of a return spring (250) which also bears against the separating disc (210) around its hub (214), the central cylinder (228) being designed to push the push rod (130) in emergency operating conditions.

## Patentansprüche

1. Bremssystem mit vom Bremspedal abgekoppeltem Hauptzylinder und hydraulischem Bremskraftverstärker, umfassend
- eine Verstärkungskammer (206), in welche das hintere Ende des Kolbens (110) des Hauptzylinders (100) eintritt und die auf gesteuerte Weise durch eine Hochdruckeinheit (300) gespeist wird, die der Verstärkungskammer auf Anforderung Bremsflüssigkeit unter Hochdruck bereitstellt, um auf den Kolben (110) des Hauptzylinders (100) einzuwirken,
- eine Stellgliedkammer (209), die einen Stellgliedkolben (220) aufnimmt, der mit der Betätigungsstange (230) des Bremspedals verbunden ist,
- eine über ein Ventil (321) gesteuerte hydraulische Verbindung (320) zwischen der Verstärkungskammer (206) und der Stellgliedkammer (209),
**dadurch gekennzeichnet, dass**
die über ein Ventil (321) gesteuerte hydraulische Verbindung (320) ein Elektroventil (321) umfasst, das normalerweise geschlossen, aber bei Versagen der Hochdruckeinheit (300) geöffnet ist, wobei bei Öffnung dieser Verbindung eine Hydraulikverbindung zwischen der Stellgliedkammer (209) und der Verstärkungskammer (206) zum Leiten der druckbeaufschlagten Flüssigkeit von der Stellgliedkammer zur Verstärkungskammer unter der Schubwirkung des Stellgliedkolbens (220) hergestellt wird,
die gesteuerte hydraulische Verbindung (310, 311) zwischen der Stellgliedkammer (220) und der Simulatorkammer (271) mit einem Elektroventil (311) versehen ist, das normalerweise geöffnet, aber bei Versagen der Hochdruckeinheit (300) geschlossen ist, um die Stellgliedkammer (209) vom Simulator (270) zu trennen.

2. Bremssystem mit hydraulischem Bremskraftverstärker nach Anspruch 1,
**dadurch gekennzeichnet, dass**
es einen Bremssimulator (270) umfasst, der aus einer Simulatorkammer (271) gebildet ist, die durch einen Kolben (272) begrenzt wird, der durch mindestens eine Feder (273, 274) zurückgeschoben wird, wobei diese Kammer (271) durch eine gesteuerte hydraulische Verbindung (310, 311) mit der Stellgliedkammer (220) in Verbindung steht.

3. Bremssystem mit hydraulischem Bremskraftverstärker nach Anspruch 1,
**dadurch gekennzeichnet, dass**
der Kolben (110) des Hauptzylinders (100) eine bewegungsfest mit dem Kolben (110) verbundene Schubstange (130) trägt, die in die Stellgliedkammer (220) vorsteht und unter normalen Betriebsbedingungen in einem festgelegten Abstand vom Stellgliedkolben (220) bleibt, aber bei Ausfall der Hochdruckeinheit (300) nach der Rückführung einer bestimmten Flüssigkeitsmenge aus der Stellgliedkammer (220) von dem Stellgliedkolben geschoben wird.

4. Bremssystem mit hydraulischem Bremskraftverstärker nach Anspruch 1,
**dadurch gekennzeichnet, dass**
der Querschnitt des Stellgliedkolbens (220) (Kolbenhemd (223)) kleiner als der Querschnitt des Kolbens (110) des Hauptzylinders in der Verstärkungskammer (206) ist.

5. Bremssystem mit hydraulischem Bremskraftverstärker nach Anspruch 1,
**dadurch gekennzeichnet, dass**
der Bremskraftverstärker einen Körper (201) umfasst, der eine erste Bohrung (202) auf der Seite des Hauptzylinders (100), gefolgt von einer zweiten Bohrung (203) und einer dritten Bohrung (207) aufweist, wobei die erste Bohrung mit dem Hauptzylinder (100) die Verstärkungskammer (206) definiert und die zweite Bohrung (203) den in der dritten Bohrung (207) geführten Stellgliedkolben (220) aufnimmt.

6. Bremssystem mit hydraulischem Bremskraftverstärker nach Anspruch 5,
**dadurch gekennzeichnet, dass**
die Verstärkungskammer (206) von der Stellgliedkammer (209) getrennt ist durch eine Trennscheibe (210), die mit einer Nabe (214) versehen ist, die das Lager für die Schubstange (130) bildet, die auf dichte Weise durch die Trennscheibe (210) hindurchführt.

7. Bremssystem mit hydraulischem Bremskraftverstärker nach Anspruch 1,
**dadurch gekennzeichnet, dass**
der Stellgliedkolben (220) auf der Seite der Stellgliedkammer (209) eine einen zentralen Zylinder (228) umgebende ringförmige Aufnahme umfasst, wobei die ringförmige Aufnahme das Ende einer Rückstellfeder (250) aufnimmt, die außerdem an der Trennscheibe (210) um ihre Nabe (214) herum anliegt, wobei der zentrale Zylinder (228) unter Notfallbetriebsbedingungen die Schubstange (130) schieben soll.
